Europäisches Patentamt

European Patent Office

Office européen des brevets

(19)

(11) Veröffentlichungsnummer: **0 291 449 B1**

## (12)  EUROPÄISCHE PATENTSCHRIFT

(45) Veröffentlichungstag der Patentschrift:
03.04.91 Patentblatt 91/14

(51) Int. Cl.$^5$: **B65G 19/26**

(21) Anmeldenummer: **88810232.4**

(22) Anmeldetag: **11.04.88**

(54) **Transportvorrichtung für eine Verpackungsmaschine.**

(30) Priorität: **13.05.87 CH 1833/87**

(43) Veröffentlichungstag der Anmeldung:
**17.11.88 Patentblatt 88/46**

(45) Bekanntmachung des Hinweises auf die
Patenterteilung:
**03.04.91 Patentblatt 91/14**

(84) Benannte Vertragsstaaten:
**CH DE FR GB IT LI NL**

(56) Entgegenhaltungen:
**FR-A- 1 095 871**
**US-A- 3 162 294**
**US-A- 4 068 756**
**US-A- 4 505 093**

(73) Patentinhaber: **SIG Schweizerische
Industrie-Gesellschaft
CH-8212 Neuhausen am Rheinfall (CH)**

(72) Erfinder: **Loewenthal, Horst
Mecklenburgstrasse 9
W-7897 Tiengen (DE)**

(74) Vertreter: **White, William et al
Patentanwalts-Bureau Isler AG Postfach 6940
CH-8023 Zürich (CH)**

## Beschreibung

Eine Transportvorrichtung gemäss Oberbegriff des Anspruchs 1 ist aus der FR-A-1 095 871 bekannt: An einer Gliederkette steht von jedem Kettenbolzen ein zylindrischer Zapfen ab. In regelmässigen Abständen sind mehrere Mitnehmer auf die Zapfen aufgesteckt. Die Mitnehmer bestehen aus einem Mitnehmerkörper und einem an dessen einem Ende daran angeformten Finger. Der Mitnehmerkörper hat eine Zentrierbohrung, die auf einen ersten Zapfen aufgesteckt ist sowie einen Steuerschlitz, der auf einem um drei Kettenteilungen vom ersten Zapfen beabstandeten zweiten Zapfen geführt ist. Dadurch wird erreicht, dass bei der Umlenkung der Kette um ein Kettenrad der Finger keine übermässige Beschleunigung auf das transportierte Produkt ausübt. Nachteilig an dieser Vorrichtung ist, dass die ganzen Schubkräfte vom Finger auf die Kette nur über die Zentrierbohrung übertragen werden, und dass der Mitnehmerkörper wenig biegesteif ist.

Der Erfindung liegt die Aufgabe zugrunde, die obigen Nachteile zu beseitigen. Diese Aufgabe wird durch die kennzeichnenden Merkmale des Anspruchs 1 gelöst.

Durch die erfindungsgemässe Ausbildung überträgt das kreisbogenförmige Langloch einen Teil der Schubkräfte, so dass die Zentrierbohrung entlastet wird und weniger rasch verschleisst. Durch die annähernd quaderförmige Ausbildung des Mitnehmerkörpers ist dieser sehr biegesteif. Weil der Mitnehmer aus Kunststoff geformt ist und keine beweglichen Teile hat, ist die erfindungsgemässe Vorrichtung im Betrieb sehr leise. Der Mitnehmer ist sehr preiswert herstellbar, z.B. durch Spritzguss. Ausserdem wird dadurch die Schmierung überflüssig, was insbesondere bei Verpackungsmaschinen für Lebensmittel von erheblicher Bedeutung ist. Mit der erfindungsgemässen Ausbildung können sehr hohe Transportleistungen erzielt werden. Durch die durchgehend gleiche Breite des Mitnehmers wird erreicht, dass der Schlitz in der Transportbahn, durch welchen die Finger ragen, durch die Mitnehmer nahezu ausgefüllt ist, so dass Verschmutzungsprobleme der Kette und ihres Antriebs weitgehend vermieden werden. Ausserdem kann die erfindungsgemässe Vorrichtung einfach auf andere Transportabstände umgestellt werden, indem die Mitnehmer mit einer andern Teilung auf die Zapfen der Kette aufgesteckt werden.

Nachfolgend wird ein Ausführungsbeispiel der Erfindung anhand der Zeichnung erläutert. Darin zeigt:

Fig. 1 einen Längsschnitt durch einen Teil einer Transportvorrichtung,

Fig. 2 einen Querschnitt durch die Vorrichtung nach Fig. 1 an der Stelle eines Kettenrades,

Fig. 3 einen Querschnitt durch einen Mitnehmer,

Fig. 4 den Bewegungsablauf des Mitnehmers bei der Umlenkung um das Kettenrad, und

Fig. 5 eine Variante der Vorrichtung nach Fig. 1.

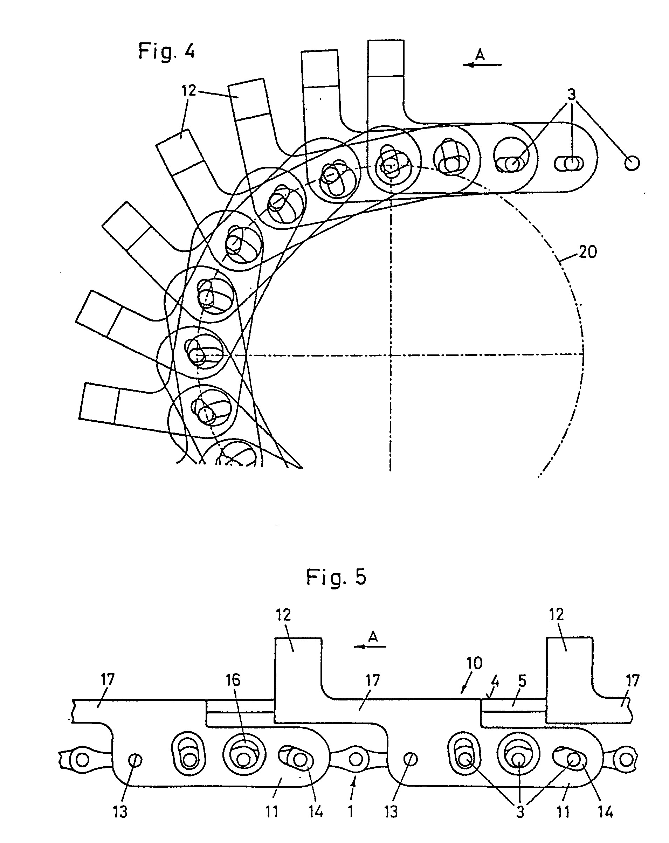

Die dargestellte Transportvorrichtung umfasst eine Gliederkette 1, bei welcher von jedem Kettenbolzen 2 ein zylindrischer Zapfen 3 absteht. Die Kette 1 ist parallel zu einer Transportbahn 4 mit einem in Transportrichtung A verlaufenden Längsschlitz 5 geführt. Auf die Zapfen 3 sind in regelmässigen Abständen Mitnehmer 10 aus Kunststoff, vorzugsweise Polyamid, aufgesteckt. Diese bestehen aus einem im wesentlichen quaderförmigen Mitnehmerkörper 11 und einem einstückig an dessen einem Ende daran angeformten Finger 12. Der Körper 11 ragt in den Schlitz 5 und der Finger 12 überragt die Bahn 4. Der Mitnehmerkörper 11 ist benachbart dem mit dem Finger 12 versehenen Ende mit einer Zentrierbohrung 13 und am gegenüberliegenden Ende mit einem um drei Kettenteilungen von der Zentrierbohrung 13 beabstandeten Steuerschlitz 14 auf zwei Zapfen 3 zentriert. Die beiden dazwischen liegenden Zapfen 3 der Kette 1 ragen in Ausnehmungen 15, 16 des Körpers 11. Die der Zentrierbohrung 13 benachbarte Ausnehmung 15 ist als kreisbogenförmig um die Zentrierbohrung 13 gebogenes Langloch ausgebildet. Die andere Ausnehmung 16 ist eine zylindrische Bohrung erheblich grösseren Durchmessers als der Zapfendurchmesser. Wie insbesondere in Fig. 4 veranschaulicht ist, ermöglichen die Ausnehmungen 15, 16 den Lauf der Kette 1 auf einem Kettenrad 20.

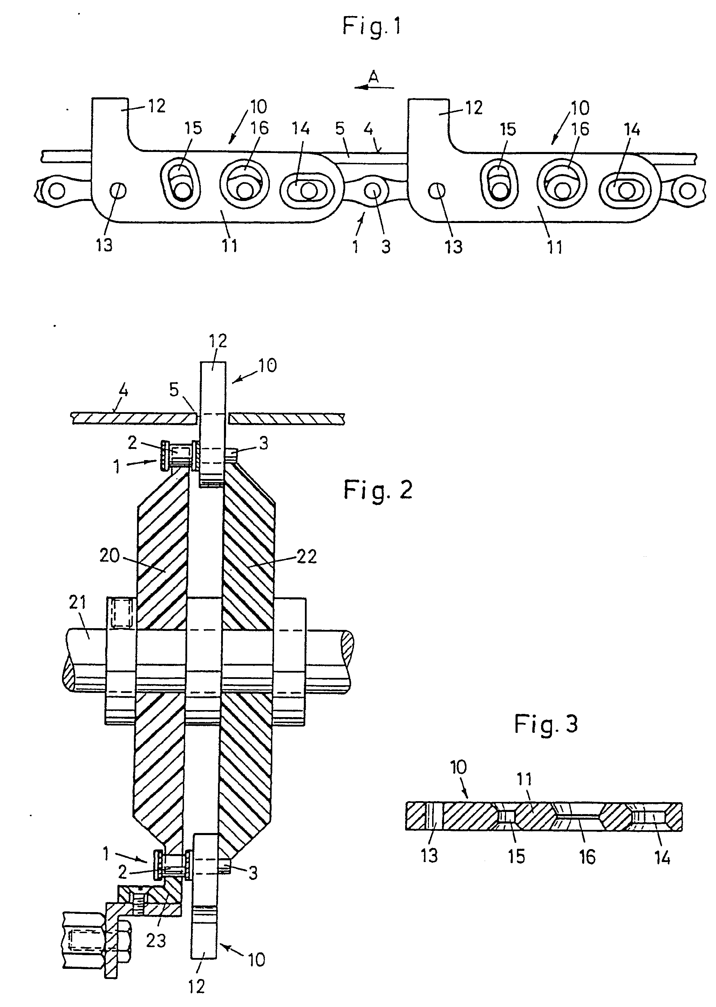

Das in Fig. 2 dargestellte Kettenrad 20 ist auf einer Antriebswelle 21 befestigt. Das Kettenrad 20 greift in die Bolzen 2 der Kette 1 ein. Beabstandet vom Kettenrad 20 ist auf der Welle 21 eine Stützscheibe 22 befestigt, die mit ihrer Peripherie das freie, über die Mitnehmer 10 vorstehende Ende der Zapfen 3 abstützt. Das untere Trum der Kette 1 wird von einer ortsfesten Kunststoff-Führungsschiene 23 getragen. Eine solche Führungsschiene ist auch zwischen den Kettenrädern 20 zum Führen des oberen Trums angebracht.

In Fig. 4 ist der Bewegungsablauf des Mitnehmers 10 beim Uebergang der Kette vom oberen Trum auf das Kettenrad 20 dargestellt. Dabei ist der Mitnehmer um jeweils eine Kettenteilung weiterbewegt gezeichnet. Wie aus der Darstellung ersichtlich ist, ist die Zusatzbeschleunigung des Fingers 12 in Förderrichtung A beim Uebergang auf das Kettenrad 20 durch die beschriebene Ausbildung des Mitnehmers 10 bloss geringfügig.

Bei der Variante nach Fig. 5 ist der Steuerschlitz 14 gegenüber der Verbindungslinie zwischen der Zentrierbohrung 13 und dem entfernten Ende des Steuerschlitzes 14 geneigt. Dadurch wird beim Uebergang auf das Kettenrad 20, wenn also der im Steuerschlitz 14 geführte Zapfen 3 im Steuerschlitz 14 nach vorn wandert, das hintere Ende des Mitnehmerkörpers 11 etwas abgesenkt und damit die Kippbewegung des Fingers 12 reduziert. Dadurch kann die bei diesem Uebergang auftretende Zusatzbeschleunigung zusätzlich reduziert werden.

Dem gleichen Zweck dient bei der Variante nach Fig. 5, dass der Finger 12 über einen in Transportrichtung A nach vorn ragenden Steg 17 mit dem Mitnehmerkörper 11 verbunden ist. Ausserdem hat diese Ausbildung den Vorteil, dass sich aneinander angrenzende Mitnehmer 10 überlappen und dadurch den Schlitz 5 in der Bahn 4 nahezu vollständig schliessen.

## Ansprüche

1. Transportvorrichtung für eine Verpackungsmaschine mit einer Gliederkette (1) und mehreren auf von jedem Kettenbolzen (2) abstehenden zylindrischen Zapfen (3) aufgesteckten Mitnehmern (10), die je mit einem am einen Ende eines Mitnehmerkörpers (11) einstückig angeformten Finger (12) durch einen Schlitz (5) einer Transportbahn (4) ragen zur Mitnahme von Gegenständen, wobei jeder Mitnehmer (10) eine Zentrierbohrung (13) aufweist, die auf einem der Zapfen (3) zentriert ist, sowie einen Steuerschlitz (14), der auf einem um mindestens zwei Kettenteilungen vom ersten Zapfen (3) beabstandeten zweiten Zapfen (3) geführt ist, dadurch gekennzeichnet, dass der Mitnehmerkörper annähernd quaderförmig ausgebildet ist, und dass er ein um eine Kettenteilung von der Zentrierbohrung (13) beabstandetes und um diese gebogenes kreisbogenförmiges Langloch (15) aufweist, in dem ein dritter Zapfen (3) geführt ist.

2. Vorrichtung nach Anspruch 1, dadurch gekennzeichnet, dass der Finger (12) die gleiche Breite hat wie der Mitnehmerkörper (11), und dass der Mitnehmer (10) aus Kunststoff besteht.

3. Vorrichtung nach Anspruch 1 oder 2, dadurch gekennzeichnet, dass der Finger (12) an dem der Zentrierbohrung (13) benachbarten Ende vom Mitnehmerkörper (11) absteht.

4. Vorrichtung nach einem der Ansprüche 1 bis 3, dadurch gekennzeichnet, dass der Mitnehmer (10) aus Polyamid besteht.

5. Vorrichtung nach einem der Ansprüche 1 bis 4, dadurch gekennzeichnet, dass der Steuerschlitz (14) gegenüber der Verbindungslinie zwischen der Zentrierbohrung (13) und dem entfernten Ende des Steuerschlitzes (14) geneigt ist.

6. Vorrichtung nach einem der Ansprüche 1 bis 5, dadurch gekennzeichnet, dass der zweite Zapfen (3) um drei Kettenteilungen vom ersten Zapfen (3) beabstandet ist, und dass der Mitnehmerkörper eine Oeffnung (16) hat, die einen vom ersten Zapfen (3) um zwei Kettenteilungen beabstandeten vierten Zapfen (3) mit Spiel umgibt.

## Claims

1. A transporation device for a packing machine comprising a link chain (1) and a plurality of carriers (10), which are placed onto cylindrical journals (3) projecting from each chain bolt (2) and which each project with a finger (12) formed in one piece onto one end of a carrier body (11) through a slot (5) in a transportation track (4) in order to carry along objects, each carrier (10) comprising a centring bore (13), which is centred on one of the journals (3), and a control slot (14), which is guided on a second journal (3) arranged at least two chain spaces away from the first journal (3), characterised in that the carrier body is approximately quadrangular and comprises a circular slot (15), which is arranged one chain space away from the centring bore (13), is curved around the latter and in which a third journal (3) is guided.

2. A device according to claim 1, characterised in that the finger (12) has the same width as the carrier body (11), and the carrier (10) is made of plastics material.

3. A device according to claim 1 or 2, characterised in that the finger (12) projects at the end of the carrier body (11) adjacent the centring bore (13).

4. A device according to one of claims 1 to 3, characterised in that the carrier (10) is made of polyamide.

5. A device according to one of claims 1 to 4, characterised in that the control slot (14) is inclined relative to the connecting line between the centring bore (13) and the far end of the control slot (14)

6. A device according to one of claims 1 to 5, characterised in that the second journal (3) is arranged three chain spaces away from the first journal (3) and the carrier body comprises an opening (16), which encloses with clearance a fourth journal (3) arranged two chain spaces away from the first journal (3).

## Revendications

1. Dispositif de transport pour une machine d'emballage, comprenant une chaîne à maillons (1) et plusieurs poussoirs (10) qui sont montés par emboîtement sur des chevilles cylindriques (3) en saillie sur chaque tourillon de chaîne (2) et qui font saillie, par un doigt (12) formé d'une seule pièce à une extrémité d'un corps de poussoir (11), à travers une fente (5) d'une piste de transport (4) pour l'entraînement d'objets, chaque poussoir (10) présentant une forure de centrage (13) qui est centrée sur l'une des chevilles (3), ainsi qu'une fente de commande (14) qui est guidée sur une deuxième cheville (3) distante de la première cheville (3) d'au moins deux pas de chaîne, caractérisé en ce que le corps de poussoir est réalisé avec une forme approximativement parallélépipédique, et en ce qu'il présente un trou oblong en arc de cercle (15) qui est distant de la forure de centrage (13) d'un pas de chaîne et est arqué autour de celle-ci, trou oblong dans lequel est guidée une troisième cheville (3).

2. Dispositif selon la revendication 1, caractérisé en ce que le doigt (12) a la même largeur que le corps de poussoir (11), et en ce que le poussoir (10) est en matière plastique.

3. Dispositif selon la revendication 1 ou 2, caractérisé en ce que le doigt (11) fait saillie à l'extrémité du corps de poussoir (11) voisine de la forure de centrage (13).

4. Dispositif selon l'une quelconque des revendications 1 à 3, caractérisé en ce que le poussoir (10) est en polyamide.

5. Dispositif selon l'une quelconque des revendications 1 à 4, caractérisé en ce que la fente de commande (14) est inclinée par rapport à la ligne de jonction entre la forure de centrage (13) et l'extrémité distale de la fente de commande (14).

6. Dispositif selon l'une quelconque des revendications 1 à 5, caractérisé en ce que la deuxième cheville (3) est distante de la première cheville (3) de trois pas de chaîne, et en ce que le corps de poussoir comporte une ouverture (16) qui entoure avec du jeu une quatrième cheville (3) distante de la première cheville (3) de deux pas de chaîne.

EP 0 291 449 B1

Fig.1

Fig. 2

Fig. 3

5

Fig. 4

Fig. 5